# EUROPÄISCHE PATENTSCHRIFT

(11) **EP 1 762 274 B1**
(45) Veröffentlichungstag und Bekanntmachung des Hinweises auf die Patenterteilung: **26.05.2010**
(21) Anmeldenummer: 06016143.7
(22) Anmeldetag: 02.08.2006
(51) Int. Cl.: A62B 35/04

(54) **Vorspannelement für eine Absturzsicherung**
Preloading element for a fall-arrest device
Element de pré-tension pour un dispositif de sécurité anti-chute

(30) Priorität: 12.09.2005 DE 202005014359 U
(43) Veröffentlichungstag der Anmeldung: 14.03.2007
(73) Patentinhaber: Skylotec GmbH, 56567 Neuwied (DE)
(72) Erfinder: Rinklake, Kai, c/o Skylotec GmbH, 56567 Neuwied (DE)
(74) Vertreter: Kandlbinder, Markus Christian

(56) Entgegenhaltungen:
- US-A- 5 220 977
- US-A- 5 358 068
- US-A- 5 361 867

## Beschreibung

Die vorliegende Erfindung betrifft ein Vorspannelement für ein Sicherungselement, insbesondere ein Sicherungsseil oder eine Sicherungsschiene, einer Absturzsicherung mit einem Fallindikator, wobei das Vorspannelement ein mit dem Sicherungselement verbindbares Zugelement, ein relativ zum Zugelement bewegbares, mit einem Ankerpunkt verbindbares Ankerelement und zwischen dem Zugelement und dem Ankerelement ein elastisch verformbares Bauteil aufweist, welches eine Vorspannung für das Sicherungselement erzeugt, gemäß dem Oberbegriff des Anspruchs 1.

Eine Anschlageinrichtung dient zum Sichern von Personen an solchen Arbeitstellen, an denen die Gefahr besteht, dass die Person durch einen Fall aus großer Höhe verletzt werden kann, wie beispielsweise auf einem Dach eines Gebäudes. Derartige permanente Anschlageinrichtungen weisen ein Sicherungselement, beispielsweise in Form eines Sicherungsseiles oder einer Sicherungsschiene, auf, welches mit geeigneten Befestigungsmitteln fest verankert ist. An diesem Sicherungselement ist ein Gleiter vorgesehen, der entlang des Sicherungselementes gleiten kann. Die zu sichernde Person wird beispielsweise über ein Mannseil mit dem Gleiter verbunden. Durch die gleitende Verschiebbarkeit des Gleiters entlang des Sicherungselementes hat die zu sichernde Person eine entsprechende Bewegungsfreiheit und kann ohne wesentliche Behinderung durch die Absturzsicherung arbeiten ausführen und ist trotzdem gegen ein Abstürzen vom Dach gesichert.

Um eine ordnungsgemäße Funktion des Sicherungselementes einerseits während des Gleitens des Gleiters entlang des Sicherungselementes und andererseits im Absturzfall beim Auffangen der zu sichernden Person zu gewährleisten, muss dass Sicherungselement mit einer geeigneten Vorspannung befestigt sein. Hierzu ist es bekannt, ein Vorspannelement vorzusehen, mit dem das Sicherungselement an einem Verankerungspunkt befestigt ist. Das Vorspannelement weist entsprechende Spannmittel auf, mit denen das Sicherungselement gespannt wird. In der Regel ist am Vorspannelement zusätzlich eine Vorspannkraftanzeige vorgesehen, so dass eine Person, die sich an dem Sicherungselement sichern möchte, selbst prüfen kann, ob das Sicherungselement mit ausreichender Vorspannung verankert ist. Ferner sind zum Mindern des Auffangstoßes im Absturzfall Falldämpfer am Sicherungselement vorgesehen, die einen Teil der beim Fall der Person freiwerdenden Energie absorbieren.

Zusätzlich ist es auch bereits bekannt, einen Fallindikator an dem Vorspannelement vorzusehen, der anzeigt, ob ein Fall einer Person stattgefunden hat und von dem Sicherungselement aufgefangen wurde. In diesem Fall ist nämlich die gesamte Absturzsicherung zu überprüfen und sind ggf. Teile der Anlage, wie beispielsweise der Falldämpfer, zu ersetzen, bevor erneut eine Person mit der Absturzsicherung gesichert werden kann. Durch den Fallindikator kann sich eine Person, die sich an der Anschlageinrichtung sichern möchte, selbst einfach und schnell prüfen, ob sich die Anschlageinrichtung im ordnungsgemäßen Zustand für das Auffangen eines Sturzes befindet, oder ob die Anschlageinrichtung kürzlich einen Sturz einer Person auffangen musste, seit dem noch nicht überprüft und instand gesetzt wurde und daher noch nicht wieder zur Absturzsicherung bereit ist.

Aus der US 5 458 221 ist ein Falldämpfer bekannt, bei dem eine Schraubenmutter innerhalb einer rohrförmigen Hülse angeordnet ist. Im Falle eines Absturzes bewegt sich die Schraubenmutter durch die rohrförmige Hülse und weitet deren Durchmesser auf. Hierdurch wird Fallenergie absorbiert. Dieser Falldämpfer ist jedoch nicht zum Spannen eines Sicherungsseiles einer permanenten Absturzsicherung geeignet.

Aus der DE 299 02 810 ist eine Vorrichtung zum Sichern von Personen gegen Absturz mit einer Führungsschiene und einem entlang der Führungsschiene bewegbaren Läufer bekannt. Hierbei ist ein Terminal zum Spannen der Führungsschiene in Längsrichtung vorgesehen. Temperaturbedingte Längenänderungen der Führungsschiene werden ausgeglichen, so dass immer eine konstante Vorspannkraft von dem Terminal erzeugt wird.

Der Erfindung liegt die Aufgabe zugrunde, ein Vorspannelement der o.g. Art bzgl. Handhabung und Funktionssicherheit zu verbessern und gleichzeitig Herstellungs- und Wartungskosten zu reduzieren.

Diese Aufgabe wird erfindungsgemäß durch ein Vorspannelement der o.g. Art mit den in Anspruch 1 gekennzeichneten Merkmalen gelöst. Vorteilhafte Ausgestaltungen der Erfindung sind in den weiteren Ansprüchen beschrieben.

Bei einem Vorspannelement der o.g. Art ist es erfindungsgemäß vorgesehen, dass der Fallindikator als kraftübertragendes Bauteil zwischen dem Zugelement und dem Ankerelement angeordnet und derart ausgebildet ist, dass der Fallindikator die Vorspannkraft formstabil überträgt und sich durch die im Falle eines auf das Sicherungselement wirkenden Kraft eines Fangstosses irreversibel deformiert.

Dies hat den Vorteil, dass für einen Benutzer eine einfache, schnelle und sichere Möglichkeit besteht, den ordnungsgemäßen Zustand der Absturzsicherung zu bestimmen, indem optisch geprüft wird, ob der Fallindikator deformiert ist oder nicht. Gleichzeitig kann der Fallindikator des Vorspannelementes kostengünstig wieder in einen betriebsfähigen Zustand, d.h. die Überwachung und Anzeige eines Fallstoßes, gesetzt werden, indem einfach das deformierte Bauteil durch ein nicht deformiertes ersetzt wird. Zusätzlich ist die Fallindikation durch ein einfaches, mechanisches Verfahren einer Deformierung realisiert, die keinen Ansatzpunkt für Fehlfunktionen bietet. Weiterhin führt ein Überspannen des Sicherungselementes ebenfalls zu einer Deformation des Fallindikators, so dass neben einem Fallstoß zusätzlich auch eine fehlerhafte Montage der Absturzsicherung von dem Fallindikator angezeigt wird und dadurch verhindert, dass sich eine Person an einer überspannten Absturzsicherung sichert.

Zweckmäßigerweise ist der Fallindikator ein rohrförmiges Element.

In einer bevorzugten Ausführungsform ist das elastisch verformbare Bauteil ein Federelement, insbesondere eine Schraubenfeder.

Das Federelement ist zwischen dem Zugelement und dem Ankerelement beispielsweise derart angeordnet, dass es die Vorspannkraft als Zugfeder oder als Druckfeder erzeugt.

In einer besonders bevorzugten Ausführungsform ist das Federelement derart angeordnet, dass sich mit einem ersten Ende an einem vom Ankerpunkt abgewandten Ende des Ankerelementes und mit einem gegenüberliegenden zweiten Ende an einem von dem Sicherungselement abgewandten Ende des Zugelementes abstützt.

Zweckmäßigerweise sind an dem vom Sicherungselement abgewandten Ende des Zugelementes zwei Scheiben angeordnet, wobei eine erste Scheibe fest mit dem Zugelement verbunden ist, eine zweite Scheibe auf dem Zugelement axial verschiebbar angeordnet ist, zwischen den Scheiben der Fallindikator angeordnet ist und sich das Federelement mit seinem zweiten Ende an der zweiten Scheibe abstützt.

Eine einfache Vorspannkraftanzeige ist dadurch realisiert, dass das vom Sicherungselement abgewandten Ende des Zugelementes innerhalb des Ankerelementes angeordnet ist und das Ankerelement eine erste Ausnehmung derart aufweist, dass die zweite Scheibe durch die erste Ausnehmung hindurch sichtbar ist, wenn die durch das elastisch verformbare Bauteil erzeugte Vorspannung in einem vorbestimmten Bereich liegt.

Zum Prüfen des Zustands des Fallindikators weist das Ankerelement eine zweite Ausnehmung derart auf, dass der Fallindikator durch diese zweite Ausnehmung hindurch von außen sichtbar ist.

Das unmittelbare Ablesen eines Wertes für die Vorspannkraft wird dadurch zur Verfügung gestellt, dass am Ankerelement benachbart zur zweiten Ausnehmung eine Werteskala angeordnet ist, die zusammen mit der axialen Position der zweiten Scheibe relativ zum Ankerelement einen Wert der Vorspannkraft anzeigt.

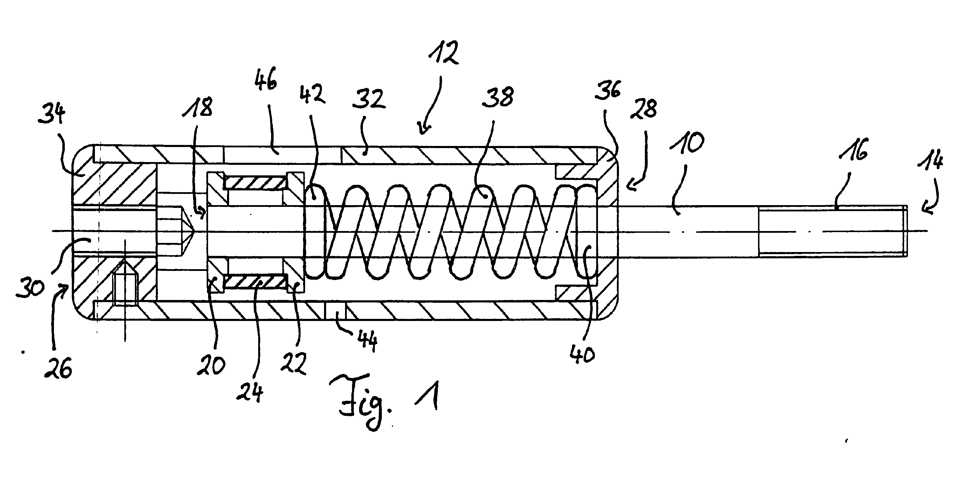

Die Erfindung wird im Folgenden anhand der Zeichnung näher erläutert. Diese zeigt in der einzigen Figur eine beispielhafte Ausführungsform eines erfindungsgemäßen Vorspannelementes in Schnittansicht.

Die in der einzigen Fig. dargestellte, beispielhafte Ausführungsform eines erfindungsgemäßen Spannelementes umfasst ein Zugelement 10 und ein Ankerelement 12. Das Zugelement 10 ist als Zugstange zum Verbinden mit einem nicht dargestellten Sicherungselement einer Absturzsicherung, beispielsweise einem Sicherungsseil oder einer Sicherungsschiene, ausgebildet und weist an einem dem Sicherungselement zugewandten Ende 14 ein Gewinde 16 auf. An einem vom Sicherungselement abgewandten Ende 18 des Zugelementes 10 ist eine erste Scheibe 20 fest mit dem Zugelement 10 verbunden und eine zweite Scheibe 22 axialverschiebbar auf dem Zugelement 10 angeordnet. Zwischen den beiden Scheiben 20 und 22 ist ein als Hohlzylinder ausgebildetes Bauteil 24 angeordnet.

Das Ankerelement 12 ist zum Befestigen an einem nicht dargestellten Ankerpunkt ausgebildet und weist ein dem Ankerpunkt zugewandtes Ende 26 und ein vom Ankerpunkt abgewandtes Ende 28 auf. An dem dem Ankerpunkt zugewandten Ende 26 des Ankerelementes 12 ist eine Gewindebohrung 30 ausgebildet. In diese Gewindebohrung 30 ist ein Befestigungsmittel zum Befestigen an dem Ankerpunkt einschraubbar, beispielsweise eine Befestigungsöse oder eine Befestigungsgabel mit Befestigungsbolzen. Das Ankerelement 10 ist aus einem Hohlzylinderelement 32, einem ersten Deckel 34 am dem Ankerpunkt zugewandten Ende 26 und einem zweiten Deckel 36 am vom Ankerpunkt abgewandten Ende 28 zusammengesetzt. Das Zugelement 10 erstreckt sich durch eine Öffnung in dem zweiten Deckel 36, so dass sich das vom Sicherungselement abgewandte Ende 18 des Zugelementes 10 innerhalb des Hohlzylinderelementes 32 und das dem Sicherungselement zugewandte Ende 14 des Zugelementes 10 mit dem Gewinde 16 außerhalb des Hohlzylinderelementes 32 befindet. Das Zugelement 10 ist dadurch über einen vorbestimmten Bereich relativ zum Ankerelement 12 verschiebbar.

Weiterhin weist das Vorspannelement ein elastisch verformbares Bauteil in Form einer Schraubenfeder 38 auf. Die Schraubenfeder 38 stützt sich mit einem ersten Ende 40 an einer Innenseite des vom Ankerpunkt abgewandten Endes 28 des Ankerelementes 12 und mit eine zweiten Ende 42 an der zweiten Scheibe 22 ab. Wenn daher das Zugelement 10 mit dem Sicherungselement der Absturzsicherung und das Ankerelement mit dem Ankerpunkt verbunden ist, ergibt sich eine Kraftübertragung von dem Sicherungselement auf den Ankerpunkt über das Gewinde 16, die Zugstange 10, die erste Scheibe 20, den Hohlzylinder 24, die zweite Scheibe 22, die Schraubenfeder 38, den zweiten Deckel 36, das Hohlzylinderelement 32, den ersten Deckel 34 und die Gewindebohrung 30. Mit zunehmendem Zug wird die Schraubenfeder 38 zusammengedrückt und erzeugt dadurch eine Vorspannkraft auf das Sicherungselement. Gleichzeitig verändert sich mit zunehmendem Zug aufgrund des Zusammendrückens der Schraubenfeder 38 die axiale Position des vom Sicherungselement abgewandten Endes 18 des Zugelementes 10 und damit der zweiten Scheibe 22 relativ zum und innerhalb des Hohlzylinderelementes 32 des Ankerelementes 12.

Die axiale Position der zweiten Scheibe 22 innerhalb des Hohlzylinderelementes 32 des Ankerelementes 12 ist somit ein Maß für die von dem erfindungsgemäßen Vorspannelement auf das Sicherungselement aufgebrachte Vorspannkraft. In einer Wandung des Hohlzylinderelementes 32 des Ankerelementes 12 ist eine erste Ausnehmung 44 an einer derartigen Stelle angebracht, dass eine gewünschte Vorspannkraft auf das Sicherungselement der Absturzsicherung wirkt, wenn die zweite Scheibe 22 eine axiale Position innerhalb Hohlzylinderelementes 32 des Ankerelementes 12 in Höhe der ersten Ausnehmung 44 erreicht. Beim Spannen des Sicherungselementes der Absturzsicherung mit der erfindungsgemäßen Vorspannvorrichtung muss die Bedienungsperson daher lediglich die Vorspannkraft so lange erhöhen, bis die zweite Scheibe 22 von außen durch die erste Ausnehmung 44 hindurch sichtbar wird. Die Vorspannkraft wird beispielsweise dadurch erhöht, dass die Bedienungsperson ein Verbindungsglied zwischen Zugelement 10 und Sicherungselement weiter auf das Gewinde 16 des Zugelementes 10 aufschraubt und dadurch den Abstand zwischen Zugelement 10 und Sicherungselement verkürzt.

Wie aus der voranstehenden Beschreibung ersichtlich, verläuft der Kraftfluss von dem Sicherungselement zu dem Ankerpunkt über das als Hohlzylinder ausgebildete Bauteil 24. Dieses ist erfindungsgemäß bezüglich Werkstoff, Wandstärke und axialer Länge derart ausgebildet, dass es die gewünschte Vorspannkraft im Wesentlichen formstabil überträgt. Im Falle eines Auffangens eines Falls einer mit dieser Absturzsicherung gesicherten Person, wirkt jedoch auf das Sicherungselement, d.h. beispielsweise das Sicherungsseil, kurzzeitig eine höhere Kraft als die Vorspannkraft. Das als Hohlzylinder ausgebildete Bauteil 24 ist erfindungsgemäß bezüglich Werkstoff, Wandstärke und axialer Länge derart ausgebildet, dass es sich unter der Krafteinwirkung eines Fallstoßes irreversibel verformt, d.h. axial zusammen gedrückt wird. Dadurch ist das Bauteil 24 ein Fallindikator, der anzeigt, dass ein Fallstoß auf die Absturzsicherung eingewirkt hat und deshalb alle Falldämpfer auszutauschen sind und die Absturzsicherung zu überprüfen ist, bevor wieder eine Person sicher an der Absturzsicherung gesichert werden kann.

Damit man einfach visuell von außen den Zustand des Fallindikators 24 prüfen kann, ist in der Wandung des Hohlzylinderelementes 32 des Ankerelementes 12 eine zweite Ausnehmung 46 ausgebildet, durch die hindurch der Zustand des Fallindikators 24 prüfbar ist. Bevor sich also eine Person an der mit dem erfindungsgemäßen Vorspannelement ausgestatteten Absturzsicherung sichert, kann diese Person einfach und schnell über die erste Ausnehmung 44 in dem Hohlzylinderelement 32 des Ankerelementes 12 die ordnungsgemäße Vorspannung des Sicherungselementes prüfen und über die Ausnehmung 46 in dem Hohlzylinderelement 32 des Ankerelementes 12 die Unversehrtheit des Fallindikators 24 und damit indirekt die Betriebsbereitschaft der Falldämpfer prüfen.

Optional ist an einer Außenseite des Hohlzylinderelementes 32 des Ankerelementes 12 benachbart zur zweiten Ausnehmung 46 eine Skala angeordnet, die bezüglich der Vorspannkraft in Abhängigkeit von der axialen Position der zweiten Scheibe 22 geeicht ist. Dadurch kann eine Bedienungsperson, welche beispielsweise die Absturzsicherung installiert oder nach einem Fallstoß wieder in Stand setzt, anhand der axialen Position der zweiten Scheibe 22 zusammen mit dieser Skala unmittelbar einen Wert der Vorspannkraft ablesen.

Zur besseren Sichtbarkeit der axialen Position der zweiten Scheibe 22 ist diese an einem äußeren Umfang beispielsweise farblich markiert bzw. mit einer Farbbeschichtung versehen.

Das Sicherungselement, beispielsweise in Form eines Seiles, ändert seine Länge bei Hitze bzw. Kälte. Bisher bekannte Vorspannelemente erlauben nur das Ablesen der Vorspannung als "i.O." oder "nicht i.O.". Dies kann ggf. dazu führen, dass ein im Winter bei niedrigen Temperaturen montiertes Sicherungsseil im Sommer bei höheren Temperaturen einen leichten Durchhang aufweist. Das erfindungsgemäße Vorspannelement mit einer Werteskala erlaubt nunmehr das Ablesen eines absoluten Wertes für die momentan herrschende Vorspannkraft. Dadurch kann bereits bei der Montage die Temperatur beachtet werden und ein zur aktuellen Umgebungstemperatur ggf. aus einer Tabelle entnommener Wert für die Vorspannkraft eingestellt werden.

## Patentansprüche

1. Vorspannelement für ein Sicherungselement, insbesondere ein Sicherungsseil oder eine Sicherungsschiene, einer Absturzsicherung mit einem Fallindikator, wobei das Vorspannelement ein mit dem Sicherungselement verbindbares Zugelement (10), ein relativ zum Zugelement (10) bewegbares, mit einem Ankerpunkt verbindbares Ankerelement (12) und zwischen dem Zugelement (10) und dem Ankerelement (12) ein elastisch verformbares Bauteil (38) aufweist, welches eine Vorspannung für das Sicherungselement erzeugt,
**dadurch gekennzeichnet,**
**dass** der Fallindikator als kraftübertragendes Bauteil (24) zwischen dem Zugelement (10) und dem Ankerelement (12) angeordnet und derart ausgebildet ist, dass der Fallindikator (24) die Vorspannkraft formstabil überträgt und sich durch die im Falle eines auf das Sicherungselement wirkenden Kraft eines Fangstosses irreversibel deformiert.

2. Vorspannelement nach Anspruch 1, **dadurch gekennzeichnet, dass** der Fallindikator ein rohrförmiges Element (24) ist.

3. Vorspannelement nach Anspruch 1 oder 2, **dadurch gekennzeichnet, dass** das elastisch verformbare Bauteil (38) ein Federelement, insbesondere eine Schraubenfeder ist.

4. Vorspannelement nach Anspruch 3, **dadurch gekennzeichnet, dass** das Federelement (38) zwischen dem Zugelement (10) und dem Ankerelement (12) derart angeordnet ist, dass es die Vorspannkraft als Zugfeder oder als Druckfeder erzeugt.

5. Vorspannelement nach Anspruch 3 oder 4, **dadurch gekennzeichnet, dass** das Federelement (38) derart angeordnet ist, dass sich mit einem ersten Ende (40) an einem vom Ankerpunkt abgewandten Ende (28) des Ankerelementes (12) und mit einem gegenüberliegenden zweiten Ende (42) an einem von dem Sicherungselement abgewandten Ende (18) des Zugelementes (10) abstützt.

6. Vorspannelement nach Anspruch 5, **dadurch gekennzeichnet, dass** an dem vom Sicherungselement abgewandten Ende (18) des Zugelementes (10) zwei Scheiben (20, 22) angeordnet sind, wobei eine erste Scheibe (20) fest mit dem Zugelement (10) verbunden ist, eine zweite Scheibe (22) auf dem Zugelement (10) axial verschiebbar angeordnet ist, zwischen den Scheiben (20, 22) der Fallindikator (24) angeordnet ist und sich das Federelement (38) mit seinem zweiten Ende (42) an der zweiten Scheibe (22) abstützt.

7. Vorspannelement nach Anspruch 6, **dadurch gekennzeichnet, dass** das vom Sicherungselement abgewandten Ende (18) des Zugelementes (10) innerhalb des Ankerelementes (12) angeordnet ist und das Ankerelement (12) eine erste Ausnehmung (44) derart aufweist, dass die zweite Scheibe (22) durch die erste Ausnehmung (44) hindurch sichtbar ist, wenn die durch das elastisch verformbare Bauteil (38) erzeugte Vorspannung in einem vorbestimmten Bereich liegt.

8. Vorspannelement nach Anspruch 6, **dadurch gekennzeichnet, dass** das Ankerelement (12) eine zweite Ausnehmung (46) derart aufweist, dass der Fallindikator (24) durch diese zweite Ausnehmung (46) hindurch von außen sichtbar ist.

9. Vorspannelement nach Anspruch 8, **dadurch gekennzeichnet, dass** am Ankerelement (12) benachbart zur zweiten Ausnehmung (46) eine Werteskala angeordnet ist, die zusammen mit der axialen Position der zweiten Scheibe (22) relativ zum Ankerelement (12) einen Wert der Vorspannkraft anzeigt.

## Claims

1. Pre-tensioning element for a securing element, in particular a securing rope or a securing rail, of a fall-arrest device having a fall indicator, wherein the pre-tensioning element comprises a tension element (10) which can be connected to the securing element, an anchor element (12) which is movable relative to the tension element (10) and connectable to an anchor point and, between the tension element (10) and the anchor element (12), an elastically deformable component (38) which generates a pre-tension for the securing element, **characterised in that** the fall indicator is arranged as a force-transmitting component (24) between the tension element (10) and the anchor element (12) and is configured such that the fall indicator (24) transmits the pre-tensioning force in form stable manner and is irreversibly deformed by the force of an impact absorber acting on the securing element in the event of a fall.

2. Pre-tensioning element according to claim 1, **characterised in that** the fall indicator is a tubular element (24).

3. Pre-tensioning element according to claim 1 or 2, **characterised in that** the elastically deformable component (38) is a spring element, particularly a helical spring.

4. Pre-tensioning element according to claim 3, **characterised in that** the spring element (38) is arranged between the tension element (10) and the anchor element (12) such that said spring element generates the pre-tensioning force as an extension spring or as a compression spring.

5. Pre-tensioning element according to claim 3 or 4, **characterised in that** the spring element (38) is arranged such that said spring element rests with a first end (40) against an end (28) of the anchor element (12) facing away from the anchor point, and with an opposing second end (42) against an end (18) of the tension element (10) facing away from the securing element.

6. Pre-tensioning element according to claim 5, **characterised in that** two disks (20, 22) are arranged at the end (18) of the tension element (10) facing away from the securing element, wherein a first disk (20) is firmly attached to the tension element (10), a second disk (22) is arranged axially displaceable on the tension element (10), the fall indicator (24) is arranged between the disks (20, 22), and the spring element (38) rests with the second end (42) thereof against the second disk (22).

7. Pre-tensioning element according to claim 6, **characterised in that** the end (18) of the tension element (10) facing away from the securing element is arranged within the anchor element (12) and the anchor element (12) has a first cut-out (44) such that the second disk (22) is visible through the first cut-out (44) when the pre-tension generated by the elastically deformable component (38) lies in a pre-determined range.

8. Pre-tensioning element according to claim 6, **characterised in that** the anchor element (12) has a second cut-out (46) such that the fall indicator (24) is visible through this second cut-out (46) from outside.

9. Pre-tensioning element according to claim 8, **characterised in that** a value scale is arranged adjacent to the second cut-out (46) on the anchor element (12), said value scale indicating, together with the axial position of the second disk (22) relative to the anchor element (12), a value of the pre-tensioning force.

## Revendications

1. Élément de précontrainte pour un élément de sécurité, en particulier un câble de sécurité ou un rail de sécurité, d'une protection anti-chute avec un indicateur de chute, ledit élément de précontrainte comprenant un élément de traction (10) susceptible d'être relié à l'élément de sécurité, un élément d'ancrage (12) mobile par rapport à l'élément de traction (10) et susceptible d'être relié à un point d'ancrage, et un composant élastiquement déformable entre l'élément de traction (10) et l'élément d'ancrage (12), celui-ci générant une précontrainte pour l'élément de sécurité,
**caractérisé en ce que**
l'indicateur de chute est agencé comme un composant de transmission de force (24) entre l'élément de traction (10) et l'élément d'ancrage (12) et est réalisé de telle façon que l'indicateur de chute (24) transmet la force de précontrainte en gardant une forme stable et se déforme de manière irréversible sous la force d'un à-coup de blocage agissant sur l'élément de sécurité en cas de chute.

2. Élément de précontrainte selon la revendication 1, **caractérisé en ce que** l'indicateur de chute est un élément (24) de forme tubulaire.

3. Élément de précontrainte selon la revendication 1 ou 2, **caractérisé en ce que** le composant élastiquement déformable (38) est un élément de ressort, en particulier un ressort hélicoïdal.

4. Élément de précontrainte selon la revendication 3, **caractérisé en ce que** l'élément de ressort (38) est agencé entre l'élément de traction (10) et l'élément d'ancrage (12) de telle manière qu'il engendre la force de précontrainte comme ressort de traction ou comme ressort de compression.

5. Élément de précontrainte selon la revendication 3 ou 4, **caractérisé en ce que** l'élément de ressort (38) est agencé de telle façon qu'il est soutenu par une première extrémité (40) sur une extrémité (28) de l'élément d'ancrage (12) détournée du point d'ancrage, et par une seconde extrémité opposée (42) sur une extrémité (18) de l'élément de traction (10) détournée de l'élément de sécurité.

6. Élément de précontrainte selon la revendication 5, **caractérisé en ce que** deux plaques (20, 22) sont agencées à l'extrémité (18) de l'élément de traction (10) détournée de l'élément de sécurité, une première plaque (20) étant reliée fermement à l'élément de traction (10) et une seconde plaque (22) étant agencée avec possibilité de translation axiale sur l'élément de traction (10), l'indicateur de chute (24) est agencé entre les plaques (20, 22), et l'élément de ressort (38) est soutenu par sa seconde extrémité (42) sur la seconde plaque (22).

7. Élément de précontrainte selon la revendication 6, **caractérisé en ce que** l'extrémité (18) de l'élément de traction (10) détournée de l'élément de sécurité est agencée à l'intérieur de l'élément d'ancrage (12), et l'élément d'ancrage (12) comporte un premier évidement (44) de telle façon que la seconde plaque (22) est visible à travers le premier évidement (44) quand la précontrainte engendrée par le composant élastiquement déformable (38) tombe dans une plage prédéterminée.

8. Élément de précontrainte selon la revendication 6, **caractérisé en ce que** l'élément d'ancrage (12) comporte un second évidement (46) de telle façon que l'indicateur de chute (24) est visible de l'extérieur à travers ce second évidement (46).

9. Élément de précontrainte selon la revendication 8, **caractérisé en ce qu'**une échelle d'évaluation est agencée sur l'élément d'ancrage (12) au voisinage du second évidement (46), laquelle indique, conjointement avec la position axiale de la seconde plaque (22) par rapport à l'élément d'ancrage (12), une valeur de la force de précontrainte.
